# EUROPEAN PATENT APPLICATION

(11) **EP 3 660 766 A1**
(43) Date of publication of application: **03.06.2020**
(21) Application number: 18208994.6
(22) Date of filing: 28.11.2018
(51) Int. Cl.: G06Q 20/08, G06Q 20/38

(54) **IMPROVEMENTS RELATING TO SECURITY AND AUTHENTICATION OF INTERACTION DATA**

(71) Applicant: Mastercard International Incorporated, Purchase NY 10577 (US)
(72) Inventor: MADDOCKS, Ian, Milton Keynes, MK10 9NY (GB); JOHNSON, Alan, Maldon, Essex CM9 8HW (GB); ROBERTS, David Anthony, Warrington, WA4 5RD (GB)
(74) Representative: Lawrence, Richard Anthony

(57) **Abstract**

There is provided a computer-implemented method of authenticating an interaction carried out between a mobile device and a gateway, the method being carried out by an authentication system remote from the mobile device and the gateway. The method comprises the steps of: receiving one or more first data items from the gateway, the one or more first data items including dynamic data corresponding to one or more second data items uniquely identifying the interaction, wherein one of the second data items corresponds to a portion of a counter value associated with the interaction; and extracting the counter value portion from the dynamic data. The method further comprises calculating one or more candidate counter values which could correspond to the counter value associated with the interaction; generating, for each of the one or more candidate counter values, a piece of corresponding candidate dynamic data based on one or more of the other first data items; and comparing each of the candidate dynamic data to the received dynamic data to ascertain whether a match is obtained.

## Description

### TECHNICAL FIELD

The present disclosure relates to a system for authenticating and validating interactions between network entities using cryptographic methods.

### BACKGROUND

Payment transactions are increasingly being carried out electronically, whereby users purchase goods and services online by entering their payment card details and authentication information at the merchant's online payment gateway. This data is then provided to the issuer of the payment card to authenticate the user and their purchase, and to ensure that the transaction data provided is valid and legitimate.

Systems which facilitate such electronic transactions for merchants are generally referred to as e-commerce payment systems, and the majority of their transactions are carried out using credit cards or debit cards issued, in conjunction with the user's banks, by card issuing entities such as Mastercard. Such entities have stringent security rules, relating to the use of their credit or debit cards, that merchants must comply with to be able to accept online payment transactions which use those cards.

It can be very time-consuming during the purchase checkout process for the user to enter all of the relevant payment and authentication data in the forms, so as to enable cross-checking and verification against stored customer data. The present applicant has developed a proprietary mobile wallet system, known as MasterPass™, which provides a digital wallet service to increase the speed of checkout without compromising the security of the transaction process. This digital wallet service stores customer details (for example, identification and address details) as well as details of one or more of the user's payment cards that will be used in e-commerce transactions. A security measure (such as a PIN or password) is also set up to request user authentication for use of the digital wallet functions. When the user initiates a purchase online for those merchant systems that are compatible with the digital wallet service, all the user need do is select the digital wallet option and sign in to the digital wallet application; the necessary details will automatically be transferred to the merchant and commerce payment system from the digital wallet application.

To ensure their security and authenticity, such digital wallet-enabled payments still must be verified by the card issuer.

Often, the verification mechanisms implemented by the card issuers utilise transaction data provided to the merchant by the user. The transaction data is forwarded to the card issuer by the merchant and used to authenticate the transaction. For a given payment card, this transaction data is usually static and is generated based on information collected during the transaction - namely, the Primary Account Number (PAN), the expiry date of the payment card, and a Card Verification Code (also referred to as a CVC2), which is a three-digit number provided on the back of a Mastercard payment card, and generated by encrypting bank card details and decimalising the result. For mobile wallet-based solutions, this data can be tokenized (i.e. replaced by a digital surrogate or 'token' payment credential) but the data is nevertheless essentially static within an ecommerce transaction, and therefore it can be relatively easily forged or replicated. This causes difficulties for the card issuer when authenticating any given transaction, as it is not cryptographically unique per transaction and can lead to declined valid transactions or a need for extra measures to prevent approval of fraudulent transactions.

One solution to the problems associated with purely static transaction data is the use of dynamic card verification codes, where the payment card itself generates a new, unpredictable, CVC2 for each transaction that is carried out. However, such dynamic codes are still effectively tied to the card that generates them and therefore a thief who is able to steal the card will still be able to carry out apparently 'valid' transactions using the stolen card, thus requiring additional fraud prevention measures to be taken elsewhere.

Against this background, the present disclosure aims to provide a system and method of carrying out e-commerce payment transactions securely and efficiently, whilst utilising the existing transaction infrastructure and authentication methods that are currently implemented by e-commerce merchants. In particular, the present disclosure aims to provide methods of validating e-commerce transactions carried out via an online payment gateway, as well as methods for generating and validating transaction data.

### SUMMARY OF THE INVENTION

According to an aspect of the present disclosure, there is provided a computer-implemented method of authenticating an interaction carried out between a mobile device and a gateway, the method being carried out by an authentication system remote from the mobile device and the gateway. The method comprises the steps of: receiving one or more first data items from the gateway, the one or more first data items including dynamic data corresponding to one or more second data items uniquely identifying the interaction, wherein one of the second data items corresponds to a portion of a counter value associated with the interaction; and extracting the counter value portion from the dynamic data. The method further comprises calculating one or more candidate counter values which could correspond to the counter value associated with the interaction; generating, for each of the one or more candidate counter values, a piece of corresponding candidate dynamic data based on one or more of the other first data items; and comparing each of the candidate dynamic data to the received dynamic data to ascertain whether a match is obtained.

The above-described method utilises the presence of small pieces of data within interaction-related data packets, which would be transmitted between the gateway and a remote authentication system as a matter of course whenever an interaction takes place, to conceal and transmit dynamic data which may be used by the remote authentication system to authenticate the interaction. In addition, using this method, only small pieces of dynamic data need to be concealed within the transmitted data packets, as only a limited amount of information (for example, an identifying counter value associated with the interaction) is required for the remote system to independently generate candidate dynamic data for comparison with the received dynamic data.

Subsequent validation of the received dynamic data, and therefore authentication of the interaction, may therefore be performed quickly and easily by the remote server.

The independent generation of candidate dynamic data by the remote server for comparison with the received dynamic data also minimises the risk of false authentication by multiple matches. Furthermore, the use of existing pathways to transmit the dynamic data, with all of the authentication functionality being provided by the remote server, increases the ease of uptake of the above-described method in existing network i nfrastru ctu re.

Optionally, the method may further comprise authenticating the interaction in the event that a match is obtained. Specifically, if a match between a particular piece of candidate dynamic data, and the received dynamic data is obtained, it can be assumed that the interaction is a valid one, as the possibility of obtaining multiple matches is very low, and this method therefore constitutes a secure authentication mechanism. Optionally, once an authentication is successfully performed, a notification may be transmitted from the remote server to the gateway and/or the mobile device to notify the respective users that the interaction was successfully authenticated.

Optionally, the method may further comprise retrieving, from an associated memory of the remote system, a range of possible counter values for use in the calculating step. In some cases, the calculating step may be carried out in dependence on a correspondence between the extracted counter value portion and the retrieved range of possible counter values. Storing a range of pre-determined counter values for subsequent retrieval improves the speed with which the comparison of candidate counter values, and hence the subsequent authentication, can be carried out, as it limits the maximum possible number of counter values that will need to be assessed and increases the efficiency of the process.

Optionally, the method further comprises updating the stored range of possible counter values based on the candidate counter value used to generate the candidate dynamic data for which a match with the received dynamic data is obtained. Updating the stored counter values based on previous successful authentication results minimises the number of counter values that will need to be assessed during the subsequent authentication and therefore increases the speed with which each authentication can be performed. This is particularly important where high volumes of interactions are carried out over a particular period of time. Additionally, updating the stored counter values ensures that the capacity of the remote server that must be dedicated to the storage of counter values is minimised.

In some cases, the received dynamic data may be encrypted. In such cases, each of the candidate dynamic data pieces may comprise a dynamic cryptogram encrypted using a cryptographic key, the cryptographic key being selected based on the corresponding candidate counter value.

Each piece of candidate dynamic data corresponds to a dynamic cryptogram generated using a cryptographic key that is associated with, or identified by, a particular counter value. The counter values are therefore used twice during the authentication process - they are used a first time to identify the correct cryptographic key that will be required to generate a candidate dynamic cryptogram; and they are subsequently used a second time during generation of the dynamic cryptogram. Transmitting the dynamic data in an encrypted format enables the dynamic data to be sent via conventional (potentially less-secure) data pathways whilst maintaining a high level of security, making it very difficult for anyone wishing to commit fraud to replicate the dynamic data.

The cryptographic keys used in the generation of candidate dynamic cryptograms may be stored within the remote system, or in a database associated with the remote system. In order to ensure that the same cryptographic key is used by the mobile device to generate the received dynamic data, as well as by the remote system to generate the candidate dynamic cryptogram, it will be appreciated that the mobile device should also preferably have access to, or be provided with, cryptographic keys when carrying out its interactions. For example, the cryptographic keys may be stored in a secure element or isolated secure operating environment within the mobile device to ensure their security. Furthermore, in some cases, the remote system itself may carry out provisioning of the cryptographic keys into the mobile device, for example via a mobile application, installed on the mobile device, which is associated with the remote system.

In some implementations of the method, the interaction may comprise an online payment transaction, and the gateway may correspond to an online payment gateway associated with a merchant. The implementation of the above-described methods in the context of online e-commerce payment transactions is particularly useful, as such transactions are inherently less secure, and the processing and transmission of data packets during transactions follows standards and pathways that are difficult to alter. Using the above-described authentication methods allows existing data transmission pathways and network infrastructure to be utilised, so as to minimise the disruption to the merchants operating online gateways, whilst increasing the security of the transactions.

Where the method is implemented in the context of a payment transaction, it may be facilitated by the presence of a mobile payment application, in association with a form of digital wallet application, which together handle the generation of the transaction data packets that are provided to the gateway (and thereafter to the remote system). It would therefore be easy for the mobile payment application to be programmed with the functionality to generate the dynamic data that will be required for authentication and to alter the 'standard' transaction data to incorporate the necessary dynamic data; altering or adding such functionality to the mobile payment application could be easily achieved via software updates. In addition, in some cases, the mobile payment application may be provided by, and associated with, the remote server so as to simplify provisioning of the mobile payment application.

According to another aspect of the present disclosure, there is provided a computer-implemented method of generating data for authentication of an interaction carried out between a mobile device and a gateway. The method comprises the steps of: generating, at the mobile device, one or more first data items corresponding to properties of the interaction, and one or more second data items uniquely identifying the interaction; and generating, at the mobile device, dynamic data based on one or more of the second data items. The method further comprises altering, at the mobile device, one or more of the first data items using a portion of the dynamic data; and transmitting, from the mobile device via the gateway, the altered one or more first data items to a remote system for authentication.

The above-described method provides the ability to generate and insert dynamic data into the data items or electronic data packets that are generated as a matter of course for a particular interaction, and which are already being sent to a remote system for authentication purposes. This method thereby increases the level of security of interactions through the use of dynamic data, making it much more difficult for a fraudulent interaction to be carried out. Simultaneously, the above-described method also advantageously exploits existing data processing and transmission pathways that are currently in place, as it can be implemented using the existing supporting network infrastructure for such interactions. This increases the ease with which the use of dynamic data may be implemented, and avoids any delays in uptake of the method which might arise due to a need to change or upgrade the associated physical network infrastructure and connections.

The above-described method is particularly useful in situations where the remote authentication system is not directly associated with either the mobile device or the gateway, and particularly for cases where the remote authentication system is required to authenticate interactions that are carried out between multiple different mobile device-gateway pairs. For example, in the case where the interactions correspond to transactions that are carried out between cardholders and merchant online gateways, as the payment card used in the transaction is not physically present during the transactions, this makes verification of the transactions much more difficult for the remote authentication system.

Optionally, one of the second data items comprises a counter value associated with the interaction, and the method step of generating the dynamic data comprises generating dynamic cryptographic data using the counter value. A counter value associated with the interaction will uniquely identify that interaction, and generating dynamic cryptographic data on the basis of this counter will ensure that not only is the dynamic data encrypted, but also that it is encrypted in a manner that can be used to authenticate the interaction. In particular, the counter value may be used to determine a specific cryptographic key that will be used to encrypt or generate the dynamic data; the counter value may also form part of the dynamic data.

In some cases, the interaction comprises an online payment transaction, and the gateway corresponds to an online payment gateway associated with a merchant. In such cases, it is noted that the one or more first data items associated with the interaction, which in a payment transaction may correspond to a PAN, expiry date and CVC2, are always transmitted between the mobile device and the gateway, and between the gateway and the remote server. Altering this data such that it serves as a vehicle for dynamic authentication-related data therefore guarantees that the dynamic data will always be transmitted to the remote server, but at no extra effort for either the mobile device user (i.e. the cardholder) or the gateway operator (i.e. the merchant). The one or more second data items in this context may therefore correspond to at least the Application Transaction Counter (ATC), Unpredictable Number (UN) and Initial Vector (IV), which are also usually generated as a matter of course for such transactions.

Optionally, the one or more first data items comprise an expiry date of a payment card used in the payment transaction, and the altering step of the method comprises replacing the expiry date with a portion of the dynamic data. It should be noted that the expiry date of the payment card used in the transaction is virtually guaranteed to be transmitted during the transaction, but is not always checked particularly rigorously by the merchant during the transaction. There is therefore potentially greater leeway to alter the expiry date portion of the transmitted transaction data than most of the other pieces of data. The above-described method replaces the actual expiry date with a plausible value that comprises the generated dynamic (cryptogram) data, and thereby ensures a guaranteed vehicle for transmission of the dynamic data via existing network infrastructure and processing pathways.

In some cases, the one or more first data items may comprise cryptographic data identifying a payment card used in the payment transaction, and the altering step of the method comprises replacing at least a part of the cryptographic data with a portion of the dynamic data. The cryptographic data (for example the CVC2 data) associated with the payment card is also usually transmitted during the course of the transaction and subsequent authentication, and therefore is a suitable vehicle for transmission of authentication-related dynamic data. Replacing a portion of the CVC2 (for example) with some of the dynamic data therefore allows a greater amount of dynamic data to be transmitted to the remote system for authentication purposes and hence more robust authentication may be carried out.

According to another aspect of the present disclosure, there is provided a computer program product comprising instructions which, when the program is executed by a computer, cause the computer to carry out the steps of the above-described methods.

According to another aspect of the present disclosure, there is provided a computer-readable storage medium comprising instructions which, when executed by a computer, cause the computer to carry out the steps of the above-described methods.

According to another aspect of the present disclosure, there is provided a mobile device for generating data for authenticating an interaction carried out between a mobile device and a gateway. The mobile device comprises a processor configured with instructions that when executed cause the processor to: generate one or more first data items corresponding to properties of the interaction, and one or more second data items uniquely identifying the interaction; generate dynamic data based on the one or more second data items; alter one or more of the first data items using a portion of the generated dynamic data; and to transmit, via the gateway to a remote authentication system, the altered one or more first data items.

In some cases, the mobile device may further comprise a mobile application arranged to carry out the generating and altering steps. Furthermore, this mobile application may be associated with remote authentication system. It would therefore be easy for the mobile application to be programmed with the functionality to generate the dynamic data that will be required for authentication and to alter the standard data to incorporate the necessary dynamic data. Altering or adding such functionality to the mobile application could be easily achieved via software updates. Advantageously, if the remote authentication device is associated with the mobile application, such software updates can seamlessly provision the necessary data into the application on the mobile device. In particular, where the method is implemented in the context of a payment transaction, it may be facilitated by the presence of a mobile payment application, in association with a form of digital wallet application, which together handles the generation of the transaction data packets that are provided to the gateway (and thereafter to the remote system).

According to another aspect of the present disclosure, there is provided a system for authenticating an interaction carried out between a mobile device and a gateway. The system comprises: an input for receiving one or more first data items from the gateway, the one or more first data items including dynamic data corresponding to one or more second data items uniquely identifying the interaction, wherein one of the second data items corresponds to a portion of a counter value associated with the interaction; and a processor. The processor is configured with instructions that when executed cause the processor to: extract the counter value portion from the dynamic data; calculate one or more candidate counter values which could correspond to the counter value associated with the interaction; generate, for each of the one or more candidate counter values, a piece of corresponding candidate dynamic data based on one or more of the other first data items; and compare each of the candidate dynamic data to the received dynamic data to ascertain whether a match is obtained.

According to another aspect of the present disclosure, there is provided a gateway arranged to process an interaction carried out with a mobile device. The gateway comprises: an input configured to receive, from the mobile device, one or more first data items, the one or more first data items including dynamic data corresponding to one or more second data items uniquely identifying the interaction; a processor configured with instructions that when executed cause the processor to assess the received one or more first data items in order to verify the interaction; and an output configured to transmit, to a remote authentication server, the one or more first data items.

It will be appreciated that similar benefits and advantages will be associated with the mobile device and system carrying out the methods, as are associated with the methods themselves. In addition, it will also be appreciated that any features associated with the herein-described methods would also be equally applicable in respect of the mobile device and the system that are arranged to carry out those methods.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the disclosure will now be described, by way of example only, with reference to the accompanying drawings, in which:
**Figure 1** shows an exemplary transaction system in which embodiments of the present disclosure may be used;
**Figure 2** shows a schematic block diagram showing further details of the user's mobile device, the merchant entity's online payment gateway, and the card issuing system according to the embodiment of Figure 1;
**Figure 3** is a flow chart illustrating the process of carrying out an e-commerce transaction, according to an embodiment of the present disclosure, in particular the generation of transaction verification data;
**Figure 4** is a flow chart illustrating a validation process carried out by the card issuing system according to an embodiment of the present disclosure; and
**Figure 5** is a diagrammatic illustration of the products obtained during the validation process of Figure 4 and provides an example process in which the viable options are shortlisted based on transaction data and prior transaction history.

Where the figures laid out herein illustrate embodiments of the present disclosure, these should not be construed as limiting to the scope of the disclosure. Where appropriate, like reference numerals will be used in different figures to relate to the same structural features of the illustrated embodiments.

### DETAILED DESCRIPTION

The present disclosure relates to a system and method for authenticating interactions that are carried out between a mobile device and a gateway. These interactions involve the exchange of electronic data packets between the mobile device and the gateway via a communications network, and the authentication of these interactions involves the use of dynamic (e.g. cryptographic) data.

Specifically, dynamic cryptographic data is generated during the interaction, and therefore uniquely identifies that interaction; this dynamic data is incorporated into the electronic data packets that are exchanged between the mobile device and the gateway as a matter of course during the interactions. Subsequently, this dynamic data is then transmitted to a remote authentication server entity for use during the authentication process.

Although the majority of this specification focuses on an implementation in the context of authenticating payment transactions (and particularly in the context of authenticating ecommerce, online payment transactions), it should be understood that possible applications of such a system and method cover various other implementation scenarios, and may be used in a wide range of technologies and fields. As long as electronic data is exchanged between two networked entities during an interaction, and dynamic data may be incorporated into this exchanged data for use during subsequent authentication, the system and method described herein will be of benefit. For example, the authentication system may be applied for access control - i.e. authenticating users attempting to access a secure location.

Specific embodiments are described below with reference to the figures.

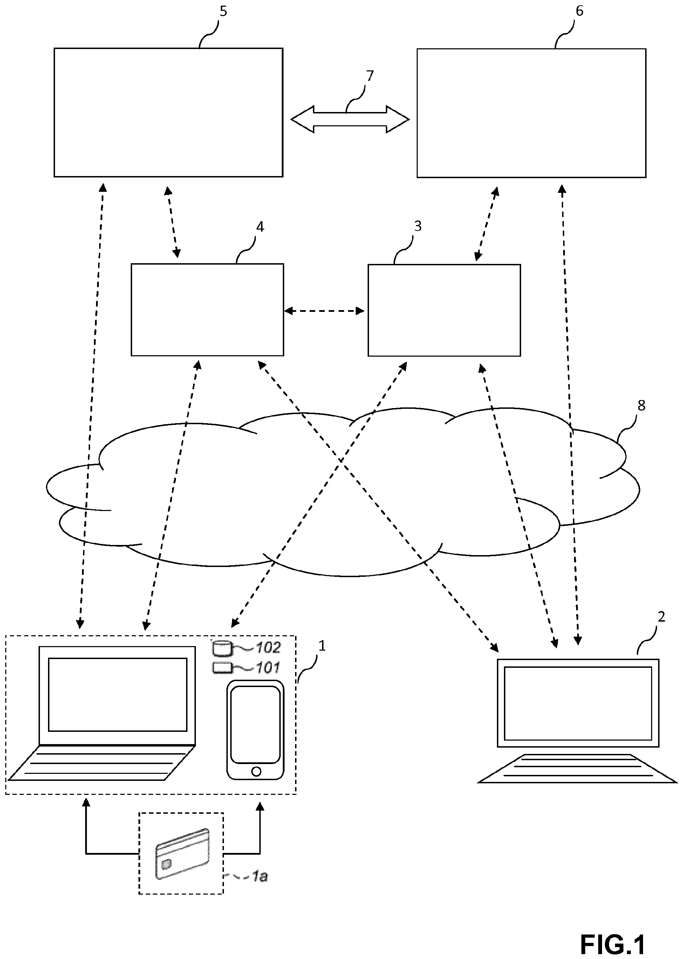

**Figure 1** shows an exemplary transaction system in which embodiments of the disclosure may be used.

A user (not shown) is provided with a payment device - this may be for example a mobile (computing) device 1, such as a mobile phone or a laptop, acting as a proxy for a payment card 1a. The mobile device has at least one processor 101 and at least one memory 102 together providing at least one execution environment, as described further below. These devices have firmware and applications (for example, a digital wallet application service) run in at least one Rich execution environment (REE) with an operating system such as iOS, Android or Windows. Payment devices will typically be equipped with means to communicate with other elements of a payment infrastructure. These communication means may comprise an antenna and associated hardware and software for data communications via a mobile network or local wireless networking using 802.11 protocols or any combination of the above. The communication means may also incorporate hardware and software to support NFC communications for contactless interactions if so desired.

The focus of the present disclosure relates particularly to (online) e-commerce payment transactions between cardholder and merchant, which generally involve the user's mobile device 1 and a payment interface of the merchant 2 (for example, the merchant's website that may be accessed by the user using their mobile device 1). Such transactions are usually initiated via a merchant's website and, upon selection of a digital payment mechanism (such as a digital wallet) by the user at the website, a prompt is provided to the user to authenticate the transaction using their mobile device 1. The payment data generated as part of the transaction is subsequently passed to the merchant 2, or to a payment gateway 3 associated with the merchant. For example, this may be an internet payment gateway, acting for an online merchant, and enabling remote e-commerce payments to be carried out. Communications between the user's mobile device 1 and the merchant 2 or their payment gateway 3 may be facilitated by a remote transaction system server entity 4. This entity may take the form of a switch that is associated with a card issuing bank or system 5, and is provided as part of a transaction infrastructure by a payment card provider, or may instead take the form of a server that is associated with the digital wallet - it may comprise a single computing system or a plurality of computing systems communicating over a network. For ease of reference, this entity will be referred to as a 'switch' 4, but this term should also be understood to encompass a digital wallet server or any of the other solutions indicated above, unless explicitly stated otherwise. Data may be provided by the mobile device 1 to the switch 4, which forwards this data to the merchant 2 (who will then communicate with their payment gateway 3), or directly to their payment gateway 3.

The payment gateway is connected to an acquiring bank 6 or other system in a secure way, and the mobile device may interact with the payment gateway via a communications network such as the public internet 8.

There is also shown a mechanism to allow connection between the mobile device 1 and a card issuing bank 5 or system. A banking infrastructure 7 will also connect the card issuer 5 and the acquiring bank 6, allowing transactions to be carried out between them.

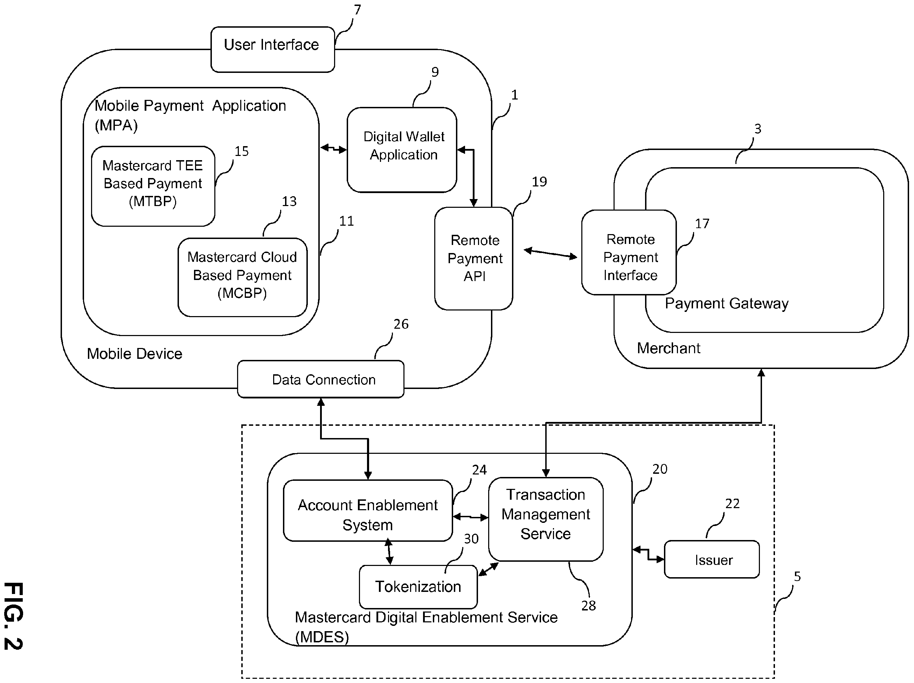

**Figure 2** shows in more detail functional elements of the system of Figure 1 which are suitable for implementing embodiments of the present disclosure, namely the user's mobile device 1, the merchant payment gateway 3 and the card issuing system 5.

The mobile device 1 comprises a user interface 7 suitable for user interaction during the transaction process, a digital wallet application 9, and a Mobile Payment Application (MPA) 11 which are both implemented in the main operating system of the mobile device 1. The digital wallet application 9 stores user details and information relating to frequently-used payment cards, and is in operative communication with the MPA 11; the MPA 11 provides the mobile payment functionality and is actively involved in the data processing associated with such payment transactions. The MPA 11 may comprise multiple sub-modules which each carry out different tasks during the transaction interactions; however it will be appreciated that certain transactions may only require the use of some of these sub-modules and the functionality they provide. For example, a Secure Element (SE) module (not shown) may manage the digitised cards, particularly in cases where an additional secure chip comprising an isolated operating environment is provided within the mobile device, and is programmed with the necessary business logic to guide the steps of the transaction process, and handle payment card data and cryptographic keys. In other examples, the Mastercard Cloud Based Payment (MCBP) module 13 manages the details of e-commerce online transactions, particularly in cases where data required for carrying out the transaction is retrieved from the Cloud.

The mobile device 1 may also comprise a secure portion or environment (not shown) which stores keys that are used during the transaction processing stage to encrypt portions of the transaction data before they are forwarded to the merchant. The exact type of secure environment utilised depends on the capabilities (e.g. operating system and specifications) of the mobile device, as well as the preferences of the card issuer. For example, as previously mentioned a Secure Element (i.e. a secure storage and execution environment) may be utilised to hold the payment application and cryptographic keys; alternatively a Trusted Execution Environment (TEE) may be used, which is logically isolated from the REE of the mobile device 1, communicating with the REE only via secure channels, and also contains one or more trusted applications adapted to run in this environment. If a TEE is used, then the MPA 11 will also comprise a Mastercard TEE Based Payment (MTBP) module 15 which manages the details of transactions carried out using the TEE.

In order to carry out an online payment transaction, the digital wallet application 9 needs to be able to provide payment data to the merchant's online payment gateway 3, for example, via a remote payment interface 17. This may be facilitated by the switch 4 (not shown in the figure) which may communicate directly with the online payment gateway 3, for example via a remote payment interface 17, or indirectly via communication between the switch 4 and the merchant 2 (whereby the merchant 2 will then communicate with its online payment gateway 3). Instructions and transaction data may be provided to the switch 4 from the mobile device 1 via a remote payment API 19 in the mobile device 1.

The card issuing system 5 comprises a Mastercard Digital Enablement Service (MDES) 20 which is a digitization and tokenization platform that is used by the card issuing entity 22 to digitize the payment card 1a into the user's digital wallet 9 and/or mobile payment application 11.. It will be appreciated, however, that digitisation of the payment card may alternatively be performed by the issuing entity 22 directly, or via a separate service provider. The MDES 20 comprises multiple modules that provide various services throughout the transaction process. For example, the Account Enablement System (AES) 24 provides services such as checking card and device eligibility, and performing authentication of the cardholder and/or transaction. Where necessary, the AES 24 also carries out provisioning of account credentials, cryptographic keys and associated data to the MPA 11 and the mobile device 1 via a secure data connection 26; this data connection 26 may also be used by the MDES to exchange information with the MPA 11 (and hence also the digital wallet application 9) during the transaction process. The Transaction Management System 28 processes transactions and verifies the received transaction data to authenticate the card credentials. The MDES 20 further comprises a tokenization module 30 which contains data and instructions for carrying out tokenization of secure transaction information.

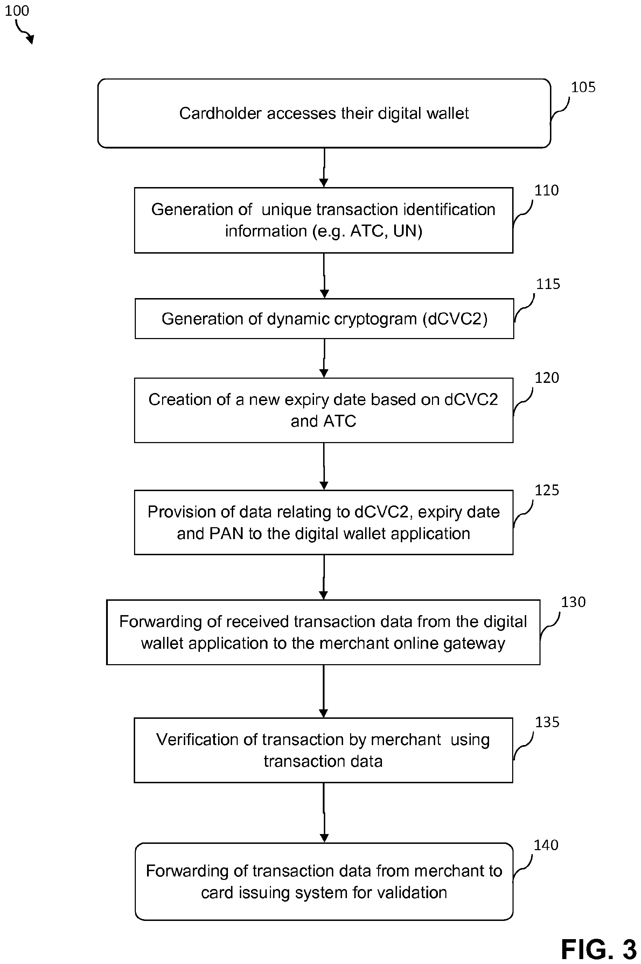

**Figure 3** illustrates the process flow of an e-commerce transaction according to an embodiment of the present disclosure.

Before providing a description of this transaction process flow, it is important to first introduce the concept of a 'dynamic cryptogram'. It will be appreciated that in this context, a 'static' cryptogram is one which is generated based on the same, unchanging pieces of data; by contrast, a 'dynamic' cryptogram is generated based on data that changes over time, and preferably at least some of the data changes every time a new dynamic cryptogram is generated (i.e. with each transaction that is carried out).

Such dynamic cryptograms increase the security of online transactions and allow a card issuing system to quickly and easily validate and authenticate transactions. In greater detail, dynamically-generated cryptographic data effectively 'signs' the transaction data for EMV transactions and is only generated when cardholder verification has been performed (for example, based on the entry of a user's PIN). The subsequent validation of this dynamic cryptographic data generally indicates that the user has entered the correct PIN, or that a correctly provisioned MPA 11 containing appropriate cryptogram-generating keys was used.

It is noted that dynamic cryptograms are also used to authenticate other types of payment transactions. For example, the processing of contactless transactions carried out by mobile devices also involves the generation of a dynamic cryptogram, this is sometimes referred to as a dCVC3, to differentiate it from a dCVC2 (which is used in the context of online payment transactions), and from a dCVC1 (which is utilised for dynamic magnetic strip transactions). However, for the purposes of the present application, the primary focus is dynamic cryptograms (dCVC2s) that are generated during online ecommerce payment transactions such as those carried out using the system of Figure 2.

In this context, a dynamic cryptogram is usually generated by the mobile device 1 (and specifically by the MPA 11, in conjunction with the digital wallet application 9, using a cryptographic key) based on the following three main pieces of data: an Application Transaction Counter (ATC), an Unpredictable Number (UN) and an Initial Vector (IV). The ATC corresponds to a sequential counter that is incremented each time the MPA 11 is executed to carry out a transaction, and is therefore unique to that particular transaction. The UN is generated by the MPA 11 based on the ATC and the transaction time (i.e. the time window during which the transaction was initiated). It is usually important to utilise the transaction time window during UN generation, as merchants may retain transaction authorisation data for long periods of time, and may forward multiple transactions in a single batch to the card issuing system 5 for validation. For example, a merchant may wait until the end of the business day before sending all of their transactions to the relevant card issuers. The IV is effectively a 'seed' value for generating the dynamic cryptogram, and can signify certain characteristics of the transaction. In particular, the IV may be used to indicate whether the transaction in question involved cardholder authentication (for example, low-value contactless transactions do not require authentication by the cardholder).

Ideally, the dynamic cryptogram generated would be transmitted by the merchant for verification in association with the transaction data to which it pertains. However, one of the challenges associated with the use of dynamic cryptographic data for transaction authentication is that the majority (if not all) of merchant systems have not been updated, or are not necessarily easily updateable, to enable or facilitate the transmission of such dynamic cryptographic data. It is therefore often the case that the merchant systems, whilst desiring to enable the use of digital wallet payments, are unable to accept and transmit the dynamic cryptographic data that is required to maintain the security of such transactions.

The present applicant has devised a method of incorporating dynamic cryptograms into existing data messages that are exchanged between the merchant and the card issuing system, and in particular, has devised a method of inserting the dCVC2 that is generated by the MPA 11 into the traditional transaction data packet that is generated as a matter of course and forwarded to the merchant 3 during each transaction. In other words, the transaction data - i.e. the PAN, expiry date and CVC2 - is used as a vehicle for transmitting the dCVC2 to the card issuing system 5. This precludes a need for the merchant to process or transmit any extra data in addition to that which would be transmitted in the normal course of events.

One of the challenges associated with inserting a dynamic cryptogram (dCVC2) into traditional transaction data is a restriction on the transaction data into which the dynamic cryptogram may be inserted. In particular, the merchant will require access to the PAN, the CVC2 and the expiry date to authenticate the transaction in the first instance. These pieces of data need to still allow the merchant to validate the transaction (i.e. they must pass the merchant's data validation processes) and therefore cannot be altered beyond recognition when incorporating the dCVC2 into the transmitted payment data packet.

The present applicant has, however, appreciated that use of the expiry date information by the merchant is generally limited to a cursory check to ascertain that the card being used for the transaction has not expired. Therefore, as long as the expiry date value indicates that the card is still valid and in date, even if the information does not necessarily match the value on the card itself, the transaction will not be rejected by the merchant.

The present applicant has therefore realised that the expiry date information may be altered to serve as a vehicle for dynamic cryptogram data, although there is a limit on the amount of information that may be contained within the expiry date. In particular, it is noted that any newly-generated 'expiry date' value should generally lie within a range of numbers between 1 and 60 months from the current date. There are usually only 60 possible values that the expiry date would be expected to take because the time window for potential expiry dates would normally be expected to be around five years (as payment cards are usually replaced within that time window), and the smallest increment in expiry date values is a calendar month. It may however be possible to extend the range by a few tens of values in certain jurisdictions (for example, utilising a time window of 7 years instead), depending on the restrictions on expiry date values in those jurisdictions.

Furthermore, there is a minimum amount of information that must be included in the dynamic cryptogram to enable the card issuing system to validate the authenticity of the dynamic cryptogram. In particular, portions of the ATC, UN and (optionally) the IV for each transaction are generally important for the validation process. The ATC identifies to the authorization system 4 the particular session key required to decode the cryptogram; the UN helps to protect against pre-play attacks from fraudsters, and also potentially to permit host system synchronisation; and, if required, a portion of the IV or information associated with the IV indicating the user authentication state of the transaction (also referred to as the CD-CVM - Consumer Device Cardholder Verification Method). These pieces of information will be utilised by the authorization system 4 of the card issuing system to generate candidate dCVC2s for comparison with the CVC2 utilised during the transaction and received from the merchant.

Generally, the dynamic cryptogram would incorporate 6 bits of data: the three least significant bits of the ATC, two bits of the UN, and one bit for the IV (i.e. whether CVM has been performed for that transaction). However, it is possible to sacrifice the use of some of these pieces of information (to decrease the size of the dynamic cryptogram), although the validation process may have to be altered to compensate for the lack of particular pieces of information.

For example, in an alternative embodiment of the present disclosure, it is envisioned that the UN would not actually be incorporated into the dynamic cryptogram that is generated, in order to reduce the amount of information that needs to be contained within the expiry date. This is due to the fact that e-commerce merchants tend to delay transmission of transactions for authentication, and therefore the information provided by the UN may not accurately reflect the actual transaction time; in such cases, the UN will be of less use to detect fraudulent transactions. In still other embodiments, it is envisioned that the IV value may not be included, as it merely provides an indication of the cardholder verification state of the transaction) and the dCVC2 may instead be generated based on the assumption that cardholder verification (i.e. CD-CVM) is always performed. In this way, the same 'seed' value for the cryptogram is utilised every time a dCVC2 is generated.

The process flow carried out between the mobile device and the e-commerce merchant in order to create the transaction verification data will now be described with reference to **Figure 3****.**

The process 100 is initiated in step 105 by the cardholder accessing (i.e. signing into) their digital wallet application 9 during an online transaction in order to retrieve identification and payment card details for provision to the merchant online payment gateway 3. In response to the transaction initiation, the MPA 11 (along with other secure applications where necessary) generates in step 110 an ATC and a UN for the transaction. Dynamic transaction data - a dCVC2 - is subsequently created in step 115, using a cryptographic key, based on the ATC, UN (if utilised) and IV (if utilised). For example, a cryptographic session key may be obtained from the MCBP, or a cryptographic master key stored in the TEE may be utilised.

The dCVC2 generated in this manner comprises 4 digits, and therefore the fourth digit of the dCVC2, together with a portion of the ATC value, are combined in step 120 to create an altered 'expiry date' value. This altered expiry date, along with the first three digits of the dCVC2 and the tokenized PAN are then provided in step 125 to the digital wallet application 9, which forwards in step 130 the data to the merchant online gateway 3 via the remote payment API 19.

The merchant uses some of this data in step 135 to authenticate the transaction and, if the transaction is deemed to be acceptable, carries the transaction out and communicates the successful transaction result back to the cardholder via their mobile device. The merchant also forwards the transaction data received from the mobile device to the card issuing system 5 in step 140 for subsequent validation.

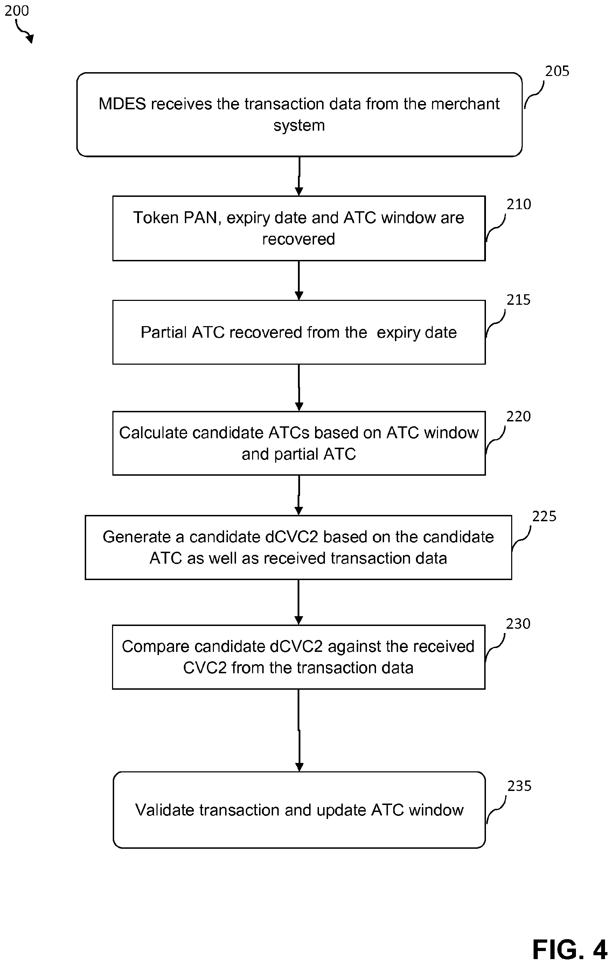

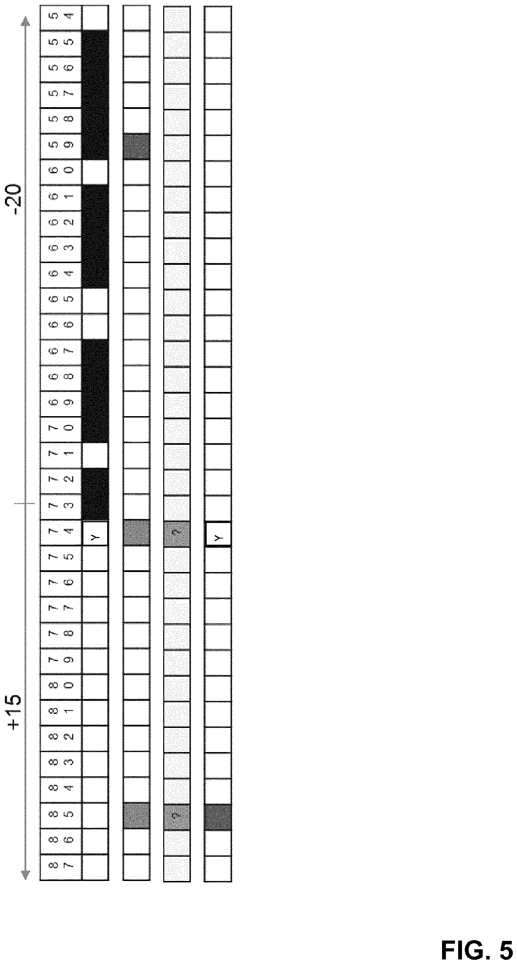

The validation process 200 carried out by the card issuing system 5 will now be described with reference to **Figures 4** **and** **5****.**

In the first step 205 of **Figure 4**, the MDES 20 receives the transaction data from the merchant system 3 and subsequently retrieves or recovers the details relating to the transaction that is to be validated. Specifically the tokenized PAN, e-commerce IV and the altered expiry date are extracted in step 210 from the transaction data packet forwarded from the merchant 3, and an ATC window is retrieved from a memory associated with the MDES. This ATC window corresponds to a range of possible ATC values that could conceivably correspond to the ATC associated with the transaction in question.

**Figure 5** illustrates an example ATC window 400 used by the MDES 20 during the validation stage. As is indicated in the figure, the top row of the figure indicates all of the possible ATC values 410 that lie within the current ATC window 400 - i.e. values between 54 and 87. In this particular example, the number 73 corresponds to the ATC value that was known to have been used in the previous transaction, and the ranges of +15 and -20 reflect the range of possible ATC values that the MDES assumes the next transaction should be associated with. This range of possible ATC values needs to be fairly large as the transactions requiring authentication in this manner have not necessarily been sequentially enacted. Furthermore, as previously mentioned, merchants may retain transaction data for relatively long periods of time, and therefore the ATC of the transaction currently under scrutiny may not be particularly recent - this is reflected by the larger proportion of lower ATC values within the range.

An analysis of the ATC window 400 is illustrated in the second row of the figure, in which it may be seen that some of the ATC values have effectively been excluded from further consideration by the MDES 20 - the crossed-out boxes indicate ATC values which cannot possibly correspond to the ATC values of the transaction in question. For example, any ATC values known to correspond to other transactions will be excluded from further consideration. The 'correct' ATC value 74 is indicated by a 'Y', however this is merely for illustrative purposes and it will be appreciated that this value is, of course, not known to the MDES 20 at this point in the validation process.

Returning now to Figure 4, the partial ATC value is recovered from the altered expiry date in step 215. Based on this partial ATC value and the knowledge of potential ATC values obtained from the ATC window 400, the MDES 20 calculates in step 220 candidate ATC values 420 that could possibly correspond to the recovered partial ATC, and which lie within the ATC window 400. This is illustrated in the third row of Figure 5, where it may be seen that three candidate ATCs 420 have been identified by the MDES 20 - these correspond to numbers 59, 74 and 85. The ATC value of 59 is indicated with an 'N' as, although it could have resulted in the partial ATC, it is an excluded value and should therefore be discounted; the remaining viable candidate ATCs are indicated by shaded boxes.

The candidate ATCs will serve two purposes in the subsequent validation stage. Initially, the ATC values will be used to identify the correct cryptographic key that will be required to generate a dynamic cryptogram; the ATC values will then also be used during to generation of the candidate dCVC2.

Once the candidate ATC values 420 have been identified, the MDES 20 generates in step 225 candidate dCVC2s for each candidate ATC value, using the transaction time and IV that were recovered from the altered expiry date. This is illustrated in the fourth row of Figure 5, showing two candidate dCVC2 values 430 indicated with question marks. A cryptographic key (selected based on the corresponding candidate ATC) is used to encrypt each candidate dCVC2 value. It will be appreciated that in those embodiments where the transaction time (UN) and/or the IV are not utilised in generating the original dynamic cryptogram dCVC2 value, the MDES 20 will assume default values for the UN and/or the IV. For example, as the 'IV' value that is transmitted is effectively a binary (yes/no) indication of the cardholder verification state of the transaction, the MDES 20 may simply assume one of the two states as a default. With regard to a default UN value, the MDES 20 may utilise a (current) clock time.

The candidate dCVC2s 430 are subsequently compared in step 230 against the received CVC2 by the MDES 20. If one of the candidate dCVC2s matches the received CVC2, the cryptogram is deemed to be valid, and the transaction is approved. This is indicated by the 'N' and 'Y' boxes in the final row of Figure 5, in which the candidate dCVC2 that was based on the ATC value of 74 is found to be a match for the received CVC2 value. It is noted that the probability of obtaining multiple matches between candidate dCVC2s and the received CVC2 is very low, and therefore this validation method is deemed to be robust and efficient.

In the final step 235 of the validation process 200, the MDES 20 updates the stored ATC window 400 based on the ATC corresponding to the matched candidate dCVC2 - i.e. the range of possible ATC values is shifted to be centred on that ATC value. If none of the candidate dCVC2s is found to be a match for the received CVC2, the cryptogram is deemed to be potentially invalid and the transaction is rejected or queried with the cardholder by the card issuing system.

The present disclosure therefore enables a card issuing system to exploit the mechanisms that are currently in place for merchants and card issuers to authenticate payment card transactions, in order to provide effective secure remote payment functionality and capabilities to all merchants using the card issuer's digital wallet application. The validation and authentication of transactions is therefore carried out in a more secure, efficient manner whilst utilising existing infrastructure, networks and data transmitted by merchants to the card issuing system.

Many modifications may be made to the above examples without departing from the scope of the present disclosure as defined in the accompanying claims.

In some additional or alternative embodiments, data from transactions that do not require use of the dCVC2 could be used to ascertain additional information about potential candidate ATCs, and to narrow down the number of candidate ATCs for which candidate dCVC2s need to be generated, if the same ATC counter is used for all transactions. For example, any contactless transactions carried out before and after a particular authentication-required transaction will also have ATCs associated with them, but such contactless transactions do not require validation in this manner as no cryptograms are generated. These ATC values, which will effectively 'bracket' the ATC which the MDES 20 is attempting to identify, may be used to narrow down the ATC window to be searched, and thereby speed up the validation process.

Alternatively, it would also be possible for transactions requiring subsequent validation to be associated with a separate ATC counter from that used for contactless and other transactions not requiring later validation. This would also reduce the number of separate ATC values that need to be considered by the MDES during validation.

## Claims

1. A computer-implemented method of authenticating an interaction carried out between a mobile device and a gateway, the method being carried out by an authentication system remote from the mobile device and the gateway, the method comprising the steps of:
receiving one or more first data items from the gateway, the one or more first data items including dynamic data corresponding to one or more second data items uniquely identifying the interaction, wherein one of the second data items corresponds to a portion of a counter value associated with the interaction;
extracting the counter value portion from the dynamic data;
calculating one or more candidate counter values which could correspond to the counter value associated with the interaction;
generating, for each of the one or more candidate counter values, a piece of corresponding candidate dynamic data based on one or more of the other first data items; and
comparing each of the candidate dynamic data to the received dynamic data to ascertain whether a match is obtained.

2. The method of claim 1, further comprising retrieving, from an associated memory of the remote system, a range of possible counter values for use in the calculating step.

3. The method of claim 2, wherein the calculating step is carried out in dependence on a correspondence between the extracted counter value portion and the retrieved range of possible counter values.

4. The method of claim 2 or claim 3, further comprising updating the stored range of possible counter values based on the candidate counter value used to generate the candidate dynamic data for which a match with the received dynamic data is obtained.

5. The method of any preceding claim, wherein the received dynamic data is encrypted, wherein each of the candidate dynamic data pieces comprises a dynamic cryptogram encrypted using a cryptographic key, the cryptographic key being selected based on the corresponding candidate counter value.

6. A computer-implemented method of generating data for authentication of an interaction carried out between a mobile device and a gateway, the method comprising the steps of:
generating, at the mobile device, one or more first data items corresponding to properties of the interaction, and one or more second data items uniquely identifying the interaction;
generating, at the mobile device, dynamic data based on one or more of the second data items;
altering, at the mobile device, one or more of the first data items using a portion of the dynamic data; and
transmitting, from the mobile device via the gateway, the altered one or more first data items to a remote system for authentication.

7. The method of claim 6, wherein one of the second data items comprises a counter value associated with the interaction, and further wherein generating the dynamic data comprises generating dynamic cryptographic data using the counter value.

8. The method of claim 6 or claim 7, wherein the interaction comprises an online payment transaction, and the gateway corresponds to an online payment gateway associated with a merchant.

9. The method of claim 8, wherein the one or more first data items comprise an expiry date of a payment card used in the payment transaction, and wherein the altering step comprises replacing the expiry date with a portion of the dynamic data.

10. The method of claim 8 or claim 9, wherein the one or more first data items comprise cryptographic data identifying a payment card used in the payment transaction, and wherein the altering step comprising replacing at least a part of the cryptographic data with a portion of the dynamic data.

11. A computer program product comprising instructions which, when the program is executed by a computer, cause the computer to carry out the steps of the method of any one of claims 1 to 10.

12. A computer-readable storage medium comprising instructions which, when executed by a computer, cause the computer to carry out the steps of the method of any one of claims 1 to 10.

13. A mobile device for generating data for authenticating an interaction carried out between a mobile device and a gateway, the mobile device comprising a processor configured with instructions that when executed cause the processor to:
generate one or more first data items corresponding to properties of the interaction, and one or more second data items uniquely identifying the interaction;
generate dynamic data based on the one or more second data items;
alter one or more of the first data items using a portion of the generated dynamic data; and
transmit, via the gateway to a remote authentication system, the altered one or more first data items.

14. A system for authenticating an interaction carried out between a mobile device and a gateway, the system comprising:
an input for receiving one or more first data items from the gateway, the one or more first data items including dynamic data corresponding to one or more second data items uniquely identifying the interaction, wherein one of the second data items corresponds to a portion of a counter value associated with the interaction; and
a processor configured with instructions that when executed cause the processor to:
extract the counter value portion from the dynamic data;
calculate one or more candidate counter values which could correspond to the counter value associated with the interaction;
generate, for each of the one or more candidate counter values, a piece of corresponding candidate dynamic data based on one or more of the other first data items; and
compare each of the candidate dynamic data to the received dynamic data to ascertain whether a match is obtained.

15. A gateway arranged to process an interaction carried out with a mobile device, the gateway comprising:
an input configured to receive, from the mobile device, one or more first data items, the one or more first data items including dynamic data corresponding to one or more second data items uniquely identifying the interaction;
a processor configured with instructions that when executed cause the processor to assess the received one or more first data items in order to verify the interaction; and
an output configured to transmit, to a remote authentication server, the one or more first data items.
